# EUROPÄISCHE PATENTSCHRIFT

(11) **EP 3 911 537 B1**
(45) Veröffentlichungstag und Bekanntmachung des Hinweises auf die Patenterteilung: **26.04.2023**
(21) Anmeldenummer: 20700991.1
(22) Anmeldetag: 14.01.2020
(51) Int. Cl.: B60N 2/68, B60N 2/58

(54) **SITZBAUGRUPPE FÜR EINEN FAHRZEUGSITZ, VERFAHREN ZUR MONTAGE EINER SITZBAUGRUPPE, SOWIE FAHRZEUGSITZ**
SEAT ASSEMBLY FOR A VEHICLE SEAT, METHOD FOR ASSEMBLING A SEAT ASSEMBLY, AND VEHICLE SEAT
MODULE DE SIÈGE POUR UN SIÈGE DE VÉHICULE, PROCÉDÉ POUR LE MONTAGE D'UN MODULE DE SIÈGE AINSI QUE SIÈGE DE VÉHICULE

(30) Priorität: 14.01.2019 DE 102019100734
(43) Veröffentlichungstag der Anmeldung: 24.11.2021
(73) Patentinhaber: Adient US LLC, Plymouth, MI 48170 (US)
(72) Erfinder: WITTE, Stephan, 42289 Essen (DE)
(74) Vertreter: Liedhegener, Ralf
(86) Internationale Anmeldenummer: PCT/EP2020/050753
(87) Internationale Veröffentlichungsnummer: WO 2020/148251

(56) Entgegenhaltungen:
- EP-B1- 2 403 382
- DE-A1- 2 001 501
- US-A1- 2006 165 955

## Beschreibung

Die Erfindung betrifft eine Sitzbaugruppe für einen Fahrzeugsitz, insbesondere Kraftfahrzeugsitz, aufweisend ein Strukturbauteil mit mehreren Versteifungsrippen, eine Polsterschicht, ein zwischen dem Strukturbauteil und der Polsterschicht angeordnetes Einlegeteil, sowie wenigstens eine an dem Strukturbauteil befestigte Komponente. Die Erfindung betrifft zudem ein Verfahren zur Montage einer Sitzbaugruppe, sowie einen Fahrzeugsitz.

### Stand der Technik

Aus der DE 10 2009 059 975 A1 ist eine Sitzstruktur, insbesondere ein Sitzteil oder eine Sitzlehne eines Einzelsitzes oder einer Hintersitzanlage für ein Fahrzeug bekannt, die als Grundkörper mindestens ein polsterbares Trägerteil aus einem Leichtbauwerkstoff aufweist. Das Trägerteil ist aus einem formstabilen Vliesstoff ausgebildet, welcher mindestens ein das Trägerteil versteifendes Funktionselement umfasst.

Die EP 2 403 382 B1 offenbart einen Rücksitz, umfassend eine Rückenlehne, welche aus einem ersten Polymermaterial ausgebildet ist, um einen Insassen zu halten, eine verstärkende Zwischenschicht, welche mit der Rückenlehne verbunden ist und aus einem zweiten Polymermaterial und mehreren Fasern, die in dem zweiten Polymermaterial imprägniert sind, ausgebildet ist.

Die DE 10 2016 212 387 A1 offenbart eine Sitzlehnenanordnung, umfassend eine Schaumstoff-Polsterschicht, eine Stütz-Teilanordnung, aufweisend eine starre Stützschicht, die eine Vielzahl von Hohlräumen und Kanälen, die an einer hinteren Fläche zum Aufnehmen von Komponenten ausgebildet sind, sowie eine im Allgemeinen glatte vordere Fläche aufweist; wenigstens eine Komponente, die in einem der Hohlräume gehalten wird, und eine zweite Komponente, die an der vorderen Fläche befestigt ist; sowie ein Bezugmaterial, das die Polsterschicht abdeckt und die Teilanordnung befestigt. Die starre Stützschicht besteht aus einem geschäumten Polypropylen-Material (EPP).

Die DE 20 2015 001 768 U1 offenbart einen Befestigungsclips für einen Kabelbaum eines Fahrzeugsitzes. Der Befestigungsclips weist einen Clipsfuß und ein Befestigungsteil zum Befestigen des Kabelbaums am Befestigungsclips auf.

Aus der DE 20 01 501 A1 ist eine Sitzbaugruppe für einen Fahrzeugsitz bekannt, die Sitzbaugruppe aufweisend ein Strukturbauteil mit mehreren Versteifungsrippen, eine Polsterschicht, ein zwischen dem Strukturbauteil und der Polsterschicht angeordnetes Einlegeteil, eine an dem Strukturbauteil befestigte, als ein Überzugsstoff und ein Zugorgan ausgebildete Komponente, und wenigstens ein Befestigungsmittel, wobei das wenigstens eine Befestigungsmittel das Einlegeteil an dem Strukturbauteil befestigt.

### Aufgabe

Der Erfindung liegt die Aufgabe zu Grunde, eine Sitzbaugruppe zu verbessern. Insbesondere soll eine Sitzbaugruppe mit einer gegenüber dem Stand der Technik reduzierten Anzahl von Befestigungsmitteln zur Verfügung gestellt werden. Zudem soll ein kostengünstiges Verfahren zur Montage einer Sitzbaugruppe zur Verfügung gestellt werden und ein kostenoptimierter Fahrzeugsitz bereitgestellt werden.

### Lösung

Diese Aufgabe wird erfindungsgemäß gelöst durch eine Sitzbaugruppe für einen Fahrzeugsitz, insbesondere Kraftfahrzeugsitz, aufweisend ein Strukturbauteil mit mehreren Versteifungsrippen, eine Polsterschicht, ein zwischen dem Strukturbauteil und der Polsterschicht angeordnetes Einlegeteil, sowie wenigstens eine an dem Strukturbauteil befestigte Komponente. Erfindungsgemäß ist wenigstens ein Befestigungsmittel vorgesehen, wobei das wenigstens eine Befestigungsmittel das Einlegeteil an dem Strukturbauteil befestigt, und das wenigstens eine Befestigungsmittel die Komponente an dem Strukturbauteil befestigt. Das wenigstens eine Befestigungsmittel weist ein Befestigungsteil zur Befestigung der Komponente an dem wenigstens einen Befestigungsmittel auf.

Dadurch, dass das wenigstens eine Befestigungsmittel das Einlegeteil an dem Strukturbauteil befestigt, und das wenigstens eine Befestigungsmittel die Komponente an dem Strukturbauteil befestigt, wobei das wenigstens eine Befestigungsmittel ein Befestigungsteil zur Befestigung der Komponente an dem wenigstens einen Befestigungsmittel aufweist, ist eine Teileanzahl von Befestigungsmitteln reduziert. Auf ein Verkleben des Einlegeteils mit dem Strukturbauteil kann verzichtet werden.

Die Sitzbaugruppe kann als eine Rückenlehne ausgeführt sein. Die Sitzbaugruppe kann als ein Sitzkissenteil ausgeführt sein. Die Sitzbaugruppe kann als eine Armlehne ausgeführt sein.

Das Strukturbauteil kann aus einem Verbundwerkstoff gefertigt sein. Das Strukturbauteil kann aus einem Faserverbundwerkstoff gefertigt sein. Der Faserverbundwerkstoff kann eine thermoplastische Matrix aufweisen. Die thermoplastische Matrix kann mit Glasfasern und/oder Carbonfasern verstärkt sein. Das Strukturbauteil kann ein umgeformtes Organoblech aufweisen. Das Strukturbauteil kann ein umgeformtes Organoblech mit angespritzten Versteifungsrippen aufweisen.

Die Versteifungsrippen können in Richtung der Polsterschicht ausgebildet sein. Die Versteifungsrippen können ausgehend von einem flächigen Bereich des Strukturbauteils in Richtung der Polsterschicht ausgebildet sein. Das Strukturbauteil kann wenigstens einen Befestigungsdom aufweisen. An dem Befestigungsdom kann das wenigstens eine Befestigungsmittel befestigt sein. Unter einem Befestigungsdom soll ein weitgehend zylindrischer oder hohlzylindrischer Bereich des Strukturbauteils verstanden werden, an dem wenigstens ein Befestigungsmittel befestigt ist.

Die Polsterschicht kann ein Schaumteil aufweisen. Die Polsterschicht kann ein Polyurethanschaumteil aufweisen.

Das Einlegeteil kann aus einem Kunststoff gefertigt sein. Das Einlegeteil kann aus einem expandierten Polypropylen (EPP) gefertigt sein.

Das Einlegeteil kann mehrere Nuten zur Aufnahme von Versteifungsrippen des Strukturbauteils aufweisen. Das Einlegeteil kann einige der Versteifungsrippen des Strukturbauteils wenigstens teilweise aufnehmen. Das Einlegeteil kann sämtliche Versteifungsrippen des Strukturbauteils wenigstens teilweise aufnehmen. Das Einlegeteil kann einige der Versteifungsrippen des Strukturbauteils vollständig aufnehmen. Das Einlegeteil kann sämtliche Versteifungsrippen des Strukturbauteils vollständig aufnehmen.

Eine der Polsterschicht zugewandte Seite des Einlegeteils kann weitgehend glattflächig sein. Eine der Polsterschicht zugewandte Seite des Einlegeteils kann abschnittsweise glattflächig sein. Eine der Polsterschicht zugewandte Seite des Einlegeteils kann Vertiefungen zur Aufnahme wenigstens einer Komponente, insbesondere wenigstens eines Kabels, aufweisen. Zwischen den Vertiefungen kann eine der Polsterschicht zugewandte Seite des Einlegeteils weitgehend glattflächig sein.

Die Materialsteifigkeit des Strukturbauteils kann größer sein als die Materialsteifigkeit des Einlegeteils. Die Materialsteifigkeit des Einlegeteils kann größer sein als die Materialsteifigkeit der Polsterschicht. Die Materialdichte des Strukturbauteils kann größer sein als die Materialdichte des Einlegeteils. Die Materialdichte des Einlegeteils kann größer sein als die Materialdichte der Polsterschicht.

Das wenigstens eine Befestigungsmittel kann als ein Befestigungsclips ausgeführt sein. Das wenigstens eine Befestigungsmittel kann als ein Bolzen ausgeführt sein. Das wenigstens eine Befestigungsmittel kann als ein Niet ausgeführt sein. Das wenigstens eine Befestigungsmittel kann als eine Verschraubung ausgeführt sein. Das wenigstens eine Befestigungsmittel kann als ein Winkelverbinder ausgeführt sein.

Das wenigstens eine Befestigungsmittel kann einen Clipsfuß zur Befestigung des Befestigungsmittels an dem Strukturbauteil aufweisen. Der Clipsfuß kann einen oder mehrere Widerhaken aufweisen. Widerhaken erhöhen die Verbindungsfestigkeit.

Das wenigstens eine Befestigungsmittel kann eine Schulter zur Fixierung des Einlegeteils an dem Strukturbauteil aufweisen. Die Schulter kann radial von einer Fügerichtung des Befestigungsmittels abstehen. Die Schulter kann flächig ausgebildet sein. Die Schulter kann membranförmig sein. Die Schulter kann rund sein. Die Schulter kann oval sein. Die Schulter kann eine beliebige Kontur haben.

Die Komponente kann ein Kabel sein. Die Komponente kann ein Kabel eines Kabelbaums sein. Das Kabel oder der Kabelbaum können zur Versorgung von Aktuatoren des Fahrzeugsitzes mit elektrischer Energie dienen.

Die Komponente kann ein Schlauch sein. Die Komponente kann einen Schlauch aufweisen. Der Schlauch kann ein Pneumatikschlauch sein. Der Schlauch kann ein Hydraulikschlauch sein.

Die Komponente kann eine Unterfederungskomponente sein. Die Komponente kann eine Lordosenstütze sein. Die Komponente kann eine Sitzklimatisierung sein. Die Komponente kann ein Bauteil einer Sitzklimatisierung sein. Die Komponente kann ein Lüftermotor einer Sitzklimatisierung sein.

Die Aufgabe wird zudem gelöst durch ein Verfahren zur Montage einer erfindungsgemäßen Sitzbaugruppe. Mittels des erfindungsgemäßen Verfahrens lassen sich Fertigungskosten und Taktzeiten reduzieren. Gegenüber geklebten Sitzbaugruppen ist zudem eine Demontage und ein Austausch von Teilen, insbesondere dem Einlegeteil, erleichtert.

Die Aufgabe wird zudem gelöst durch einen Fahrzeugsitz mit einer erfindungsgemäßen Sitzbaugruppe, insbesondere montiert mittels eines erfindungsgemäßen Verfahrens. Ein Fahrzeugsitz mit einer erfindungsgemäßen Sitzbaugruppe kann kostengünstig montiert werden. Zudem entfallen gegenüber dem Stand der Technik weitere Befestigungsmittel.

### Figuren und Ausführungsformen der Erfindung

Bevor nachfolgend Ausgestaltungen der Erfindung eingehender an Hand von Figuren beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine perspektivische Ansicht eines erfindungsgemäßen Fahrzeugsitzes,
- Fig. 2:: ausschnittsweise ein Strukturbauteil des Fahrzeugsitzes,

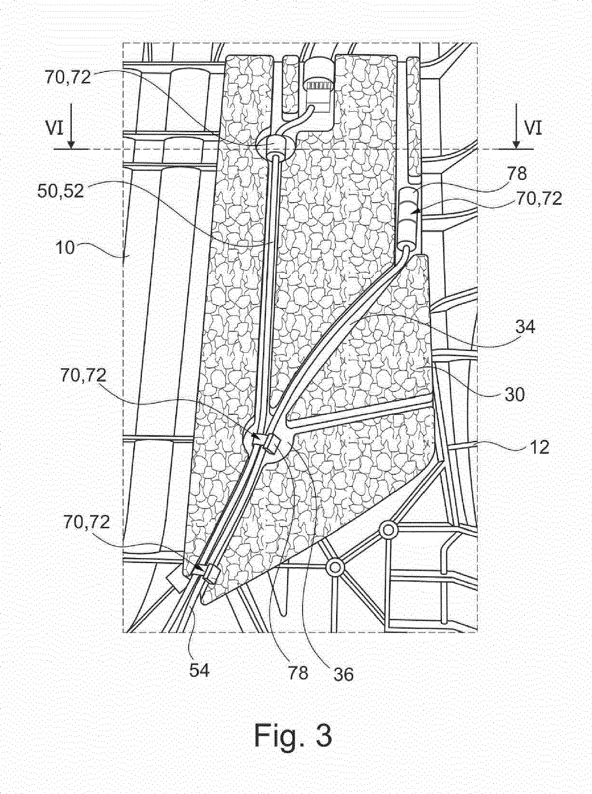

- Fig. 3:: ausschnittsweise ein mittels mehrerer als Befestigungsclipse ausgebildeter Befestigungsmittel an dem Strukturbauteil befestigtes Einlegeteil sowie einen an den Befestigungsclipsen befestigten Kabelbaum,

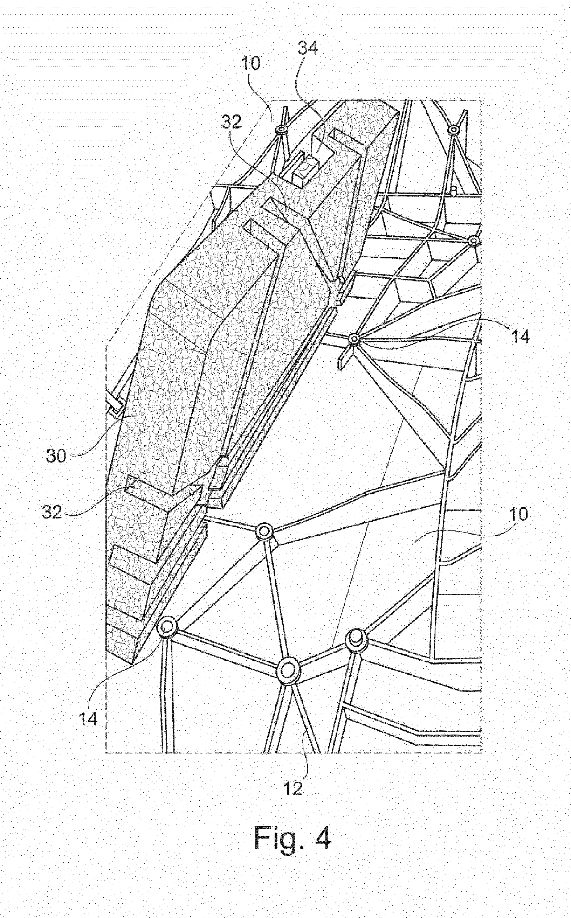

- Fig. 4: ausschnittsweise das Strukturbauteil und das Einlegeteil, wobei das Einlegeteil gegenüber einem fertig montierten Zustand des Fahrzeugsitzes relativ zu dem Strukturbauteil geschwenkt dargestellt ist,

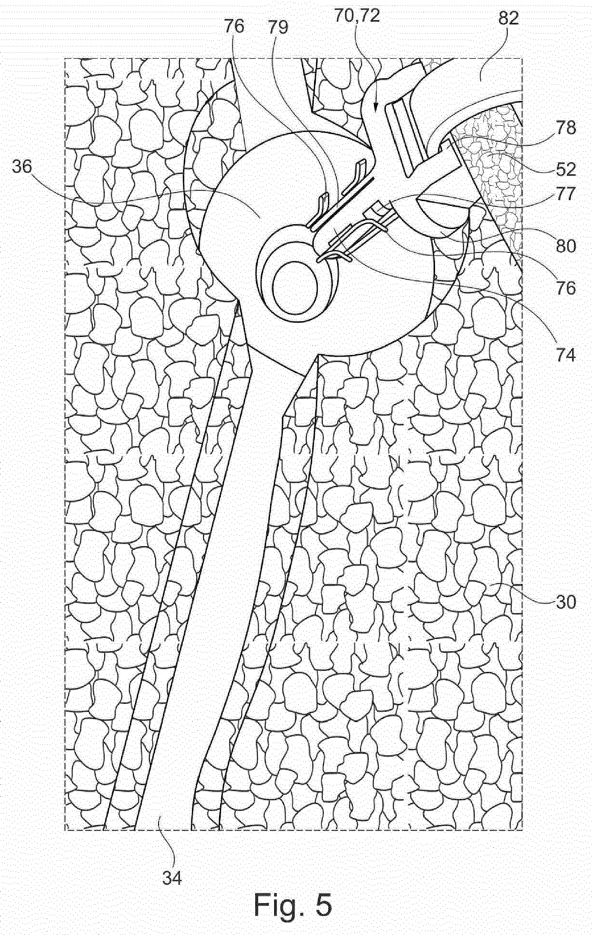

- Fig. 5: ausschnittsweise das Einlegeteil, einen Befestigungsclips und ein an dem Befestigungsclips befestigtes Kabel während der Montage des Fahrzeugsitzes, und

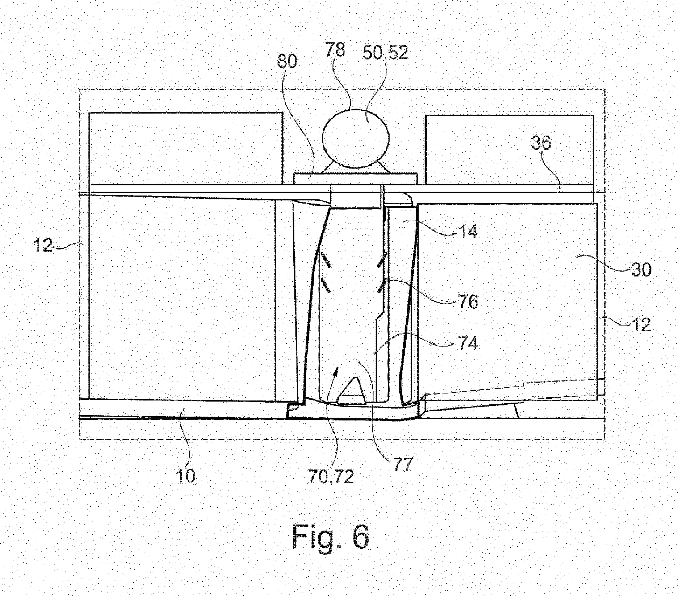

- Fig. 6:: schematisch einen Schnitt entlang der Linie VI - VI in Fig. 3.

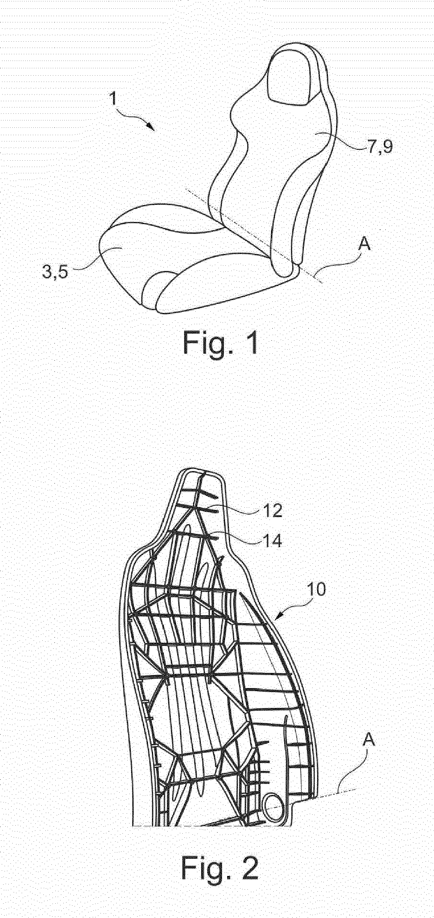

Figur 1 zeigt einen Fahrzeugsitz 1, insbesondere für ein Kraftfahrzeug. Der Fahrzeugsitz 1 weist als eine erste Sitzbaugruppe 3 ein Sitzkissenteil 5 und als eine zweite Sitzbaugruppe 7 eine Rückenlehne 9 auf. Die Rückenlehne 9 ist, beispielsweise mittels zweier Beschläge, neigungseinstellbar um eine Lehnenschwenkachse A mit dem Sitzkissenteil 5 verbunden. Nachfolgend wird die als Rückenlehne 9 ausgeführte Sitzbaugruppe 7 detailliert beschrieben. Die als Sitzkissenteil 5 ausgeführte Sitzbaugruppe 3 ist vorliegend analog aufgebaut, kann aber auch abweichend aufgebaut sein. Insbesondere kann die Rückenlehne 9 wie nachfolgend beschrieben aufgebaut sein, und die zugehörige Sitzbaugruppe 3 abweichend aufgebaut sein.

Die Rückenlehne 9 weist eine in den Figuren nicht dargestellte Polsterschicht auf, die ein Schaumteil, vorzugsweise aus Polyurethanschaum, sowie einen Polsterbezug, insbesondere aus Stoff oder Leder, umfasst. Die Polsterschicht dient einer komfortablen Abstützung des Sitzinsassen in dem Fahrzeugsitz 1.

Die Rückenlehne 9 weist zudem als tragende Struktur ein Strukturbauteil 10 mit mehreren Versteifungsrippen 12 auf. Das Strukturbauteil 10 ist dazu ausgelegt die Polsterschicht abzustützen, sowie Gebrauchslasten und Crashlasten vollständig aufnehmen zu können und über das Sitzkissenteil 5 in eine Karosseriestruktur des Fahrzeugs weiterzuleiten. Das Strukturbauteil 10 ist auf einer einem Sitzinsassen abgewandten Seite weitgehend flächig ausgebildet. Ausgehend von dem flächigen Bereich des Strukturbauteils 10 weisen die Versteifungsrippen 12 in Richtung der Polsterschicht. Mehrere Versteifungsrippen 12 kreuzen einander. In einigen Kreuzungspunkten der Versteifungsrippen 12 sind Befestigungsdome 14 ausgebildet.

Zwischen dem Strukturbauteil 10 und der Polsterschicht ist ein Einlegeteil 30 angeordnet. Das Einlegeteil 30 dient dazu, die Polsterschicht vor einem direkten Kontakt mit den Versteifungsrippen 12 zu schützen. Die Versteifungsrippen 12 können sich dadurch nicht in die Polsterschicht hineindrücken, wodurch eine Beschädigung der Polsterschicht vermieden und ein Sitzkomfort des Fahrzeugsitzes 1 erhöht ist.

Das Einlegeteil 30 weist mehrere Nuten 32 zur wenigstens teilweisen Aufnahme der Versteifungsrippen 12 und der Befestigungsdome 14 auf. Zudem ergibt sich durch die formschlüssige Paarung der Versteifungsrippen 12 mit den Nuten 32 eine Fixierung des Einlegeteils 30 an dem Strukturbauteil 10. Auf der dem Strukturbauteil 10 abgewandten Seite des Einlegeteils 30 weist das Einlegeteil 30 mehrere Vertiefungen 34 zur Aufnahme von Kabeln 52 eines Kabelbaums 54 auf. Der Kabelbaum 54 bildet eine Komponente 50 des Fahrzeugsitzes 1.

Zusätzlich zur Fixierung des Einlegeteils 30 an dem Strukturbauteil 10 mittels der in den Nuten 32 angeordneten Versteifungsrippen 12, ist das Einlegeteil 30 mittels mehrerer Befestigungsmittel 70 an dem Strukturbauteil 10 befestigt. Die Befestigungsmittel 70 sind vorliegend als Befestigungsclipse 72 ausgeführt. Die Befestigungsclipse 72 dienen zudem einer Befestigung der Kabel 52 des Kabelbaums 54 an dem Strukturbauteil 10 und insbesondere einer Fixierung der Kabel 52 in den Vertiefungen 34 des Einlegeteils 30.

Jeder der Befestigungsclipse 72 weist einen Clipsfuß 74 mit mehreren Widerhaken 76 auf. Der Clipsfuß 74 ist in eine Öffnung eines der Befestigungsdome 14 des Strukturbauteil 10 eingesteckt. Die Widerhaken 76 verhindern, dass der Clipsfuß 74 aus dem Befestigungsdom 14 austreten kann. Die Befestigungsclipse 72 weisen einen Grundkörper 77 aus Kunststoff auf. Vorliegend sind die Widerhaken 76 aus Metall. Die Widerhaken 76 sind Bestandteile eines Metallkäfigs, der im Bereich des Clipsfußes 74 an dem Grundkörper 77 befestigt ist.

Der Befestigungsclips 72 weist zudem ein Befestigungsteil 78 zur Befestigung einer Komponente 50, vorliegend eines Kabels 52 des Kabelbaums 54, auf. Das Befestigungsteil 78 ist vorliegend eine als eine Öse ausgeführt, durch die ein Kabelbinder 82 hindurch läuft und das Kabel 52 mit dem Befestigungsteil 78 verbindet. Der Kabelbinder 82 kann in einer Abwandlung des Ausführungsbeispiels an das Befestigungsteil 78 angespritzt sein.

Der Befestigungsclips 72 weist zudem eine Schulter 80 auf. Eine in das Einlegeteil 30 eingearbeitete Verstärkungsplatte 36 ist zwischen der Schulter 80 des Befestigungsclips 72 und dem zugeordneten Befestigungsdom 14 formschlüssig fixiert. Die Verstärkungsplatte 36 weist dazu ein Durchgangsloch auf, dessen Durchmesser geringfügig größer ist als ein Durchmesser des Clipsfußes 74, und dessen Durchmesser kleiner ist als ein Durchmesser der Schulter 80. In einer Abwandlung des Ausführungsbeispiels entfällt die Verstärkungsplatte 36 und die Schulter 80 des Befestigungsclips 72 liegt unmittelbar an einer Stufe des Einlegeteils 30 an.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein.

Obwohl die Erfindung in den Figuren und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 3: Sitzbaugruppe
- 5: Sitzkissenteil
- 7: Sitzbaugruppe
- 9: Rückenlehne
- 10: Strukturbauteil
- 12: Versteifungsrippe
- 14: Befestigungsdom
- 30: Einlegeteil
- 32: Nut
- 34: Vertiefung
- 36: Verstärkungsplatte
- 50: Komponente
- 52: Kabel
- 54: Kabelbaum
- 70: Befestigungsmittel
- 72: Befestigungsclip
- 74: Clipsfuß
- 76: Widerhaken
- 77: Grundkörper
- 78: Befestigungsteil
- 79: Käfig
- 80: Schulter
- 82: Kabelbinder
- A: Lehnenschwenkachse

## Patentansprüche

1. Sitzbaugruppe (3, 7) für einen Fahrzeugsitz (1), insbesondere Kraftfahrzeugsitz, aufweisend
a) ein Strukturbauteil (10) mit mehreren Versteifungsrippen (12),
b) eine Polsterschicht,
c) ein zwischen dem Strukturbauteil (10) und der Polsterschicht angeordnetes Einlegeteil (30),
d) wenigstens eine an dem Strukturbauteil (10) befestigte Komponente (50), sowie
e) wenigstens ein Befestigungsmittel (70), wobei
- das wenigstens eine Befestigungsmittel (70) das Einlegeteil (30) an dem Strukturbauteil (10) befestigt,
**dadurch gekennzeichnet, dass**
- das wenigstens eine Befestigungsmittel (70) die Komponente (50) an dem Strukturbauteil (10) befestigt, und
das wenigstens eine Befestigungsmittel (70) ein Befestigungsteil (78) zur Befestigung der Komponente (50) an dem wenigstens einen Befestigungsmittel (70) aufweist.

2. Sitzbaugruppe (7) nach Anspruch 1, **dadurch gekennzeichnet, dass** die Sitzbaugruppe (7) als eine Rückenlehne (9) ausgeführt ist.

3. Sitzbaugruppe (3, 7) nach Anspruch 1 oder 2, **dadurch gekennzeichnet, dass** das Strukturbauteil (10) aus einem Faserverbundwerkstoff gefertigt ist.

4. Sitzbaugruppe (3, 7) nach Anspruch 3, **dadurch gekennzeichnet, dass** der Faserverbundwerkstoff eine thermoplastische Matrix aufweist, die mit Glasfasern und/oder Carbonfasern verstärkt ist.

5. Sitzbaugruppe (3, 7) nach wenigstens einem der Ansprüche 1 bis 4, **dadurch gekennzeichnet, dass** das Strukturbauteil (10) ein umgeformtes Organoblech mit angespritzten Versteifungsrippen (12) aufweist.

6. Sitzbaugruppe (3, 7) nach wenigstens einem der Ansprüche 1 bis 5, **dadurch gekennzeichnet, dass** das Strukturbauteil (10) wenigstens einen Befestigungsdom (14) aufweist, an dem das wenigstens eine Befestigungsmittel (70) befestigt ist.

7. Sitzbaugruppe (3, 7) nach wenigstens einem der Ansprüche 1 bis 6, **dadurch gekennzeichnet, dass** das Einlegeteil (30) aus einem expandierten Polypropylen gefertigt ist.

8. Sitzbaugruppe (3, 7) nach wenigstens einem der Ansprüche 1 bis 7, **dadurch gekennzeichnet, dass** das Einlegeteil (30) mehrere Nuten (32) zur Aufnahme von Versteifungsrippen (12) des Strukturbauteils (10) aufweist.

9. Sitzbaugruppe (3, 7) nach wenigstens einem der Ansprüche 1 bis 8, **dadurch gekennzeichnet, dass** die Materialsteifigkeit des Strukturbauteils (10) größer ist als die Materialsteifigkeit des Einlegeteils (30), wobei die Materialsteifigkeit des Einlegeteils (30) größer ist als die Materialsteifigkeit der Polsterschicht.

10. Sitzbaugruppe (3, 7) nach wenigstens einem der Ansprüche 1 bis 9, **dadurch gekennzeichnet, dass** das wenigstens eine Befestigungsmittel (70) als ein Befestigungsclips (72) ausgeführt ist.

11. Sitzbaugruppe (3, 7) nach einem der Ansprüche 1 bis 10, **dadurch gekennzeichnet, dass** das wenigstens eine Befestigungsmittel (70) einen Clipsfuß (74) zur Befestigung des Befestigungsmittels (70) an dem Strukturbauteil (10) aufweist, insbesondere der Clipsfuß (74) mehrere Widerhaken (76) aufweist.

12. Sitzbaugruppe (3, 7) nach wenigstens einem der Ansprüche 1 bis 11, **dadurch gekennzeichnet, dass** die Komponente (50) ein Kabel (52), insbesondere eines Kabelbaums (54), ist.

13. Verfahren zur Montage einer Sitzbaugruppe (3, 7) nach wenigstens einem der Ansprüche 1 bis 12, **dadurch gekennzeichnet, dass** in einem Verfahrensschritt das Einlegeteil (30) mittels des wenigstens einen Befestigungsmittels (70) an dem Strukturbauteil (10) befestigt wird, und in demselben Verfahrensschritt oder einem anschließenden Verfahrensschritt oder einem vorhergehenden Verfahrensschritt die wenigstens eine Komponente (50) an dem wenigstens einen Befestigungsmittel (70) befestigt wird.

14. Fahrzeugsitz (1) mit einer Sitzbaugruppe (3, 7) nach einem der Ansprüche 1 bis 12, insbesondere montiert mittels eines Verfahrens nach Anspruch 13.

## Claims

1. Seat assembly (3, 7) for a vehicle seat (1), in particular a motor vehicle seat, having
a) a structural component (10) with a plurality of stiffening ribs (12),
b) an upholstery layer,
c) an insert part (30) which is arranged between the structural component (10) and the upholstery layer,
d) at least one component part (50) which is fastened to the structural component (10), and also
e) at least one fastening means (70), wherein
- the at least one fastening means (70) fastens the insert part (30) to the structural component (10),
**characterized in that**
- the at least one fastening means (70) fastens the component part (50) to the structural component (10), and
the at least one fastening means (70) has a fastening part (78) for fastening the component part (50) to the at least one fastening means (70).

2. Seat assembly (7) according to Claim 1, **characterized in that** the seat assembly (7) is embodied as a backrest (9).

3. Seat assembly (3, 7) according to Claim 1 or 2, **characterized in that** the structural component (10) is manufactured from a fibre composite material.

4. Seat assembly (3, 7) according to Claim 3, **characterized in that** the fibre composite material comprises a thermoplastic matrix which is reinforced with glass fibres and/or carbon fibres.

5. Seat assembly (3, 7) according to at least one of Claims 1 to 4, **characterized in that** the structural component (10) comprises a formed organosheet with stiffening ribs (12) that are applied by injection moulding.

6. Seat assembly (3, 7) according to at least one of Claims 1 to 5, **characterized in that** the structural component (10) has at least one fastening dome (14) to which the at least one fastening means (70) is fastened.

7. Seat assembly (3, 7) according to at least one of Claims 1 to 6, **characterized in that** the insert part (30) is manufactured from an expanded polypropylene.

8. Seat assembly (3, 7) according to at least one of Claims 1 to 7, **characterized in that** the insert part (30) has a plurality of grooves (32) for receiving stiffening ribs (12) of the structural component (10) .

9. Seat assembly (3, 7) according to at least one of Claims 1 to 8, **characterized in that** the material stiffness of the structural component (10) is greater than the material stiffness of the insert part (30), wherein the material stiffness of the insert part (30) is greater than the material stiffness of the upholstery layer.

10. Seat assembly (3, 7) according to at least one of Claims 1 to 9, **characterized in that** the at least one fastening means (70) is embodied as a fastening clip (72).

11. Seat assembly (3, 7) according to one of Claims 1 to 10, **characterized in that** the at least one fastening means (70) has a clip foot (74) for fastening the fastening means (70) to the structural component (10), in particular the clip foot (74) has a plurality of barbs (76).

12. Seat assembly (3, 7) according to at least one of Claims 1 to 11, **characterized in that** the component part (50) is a cable (52), in particular of a cable harness (54).

13. Method for assembling a seat assembly (3, 7) according to at least one of Claims 1 to 12, **characterized in that**, in one method step, the insert part (30) is fastened to the structural component (10) by the at least one fastening means (70), and in the same method step or a subsequent method step or a preceding method step, the at least one component part (50) is fastened to the at least one fastening means (70).

14. Vehicle seat (1) comprising a seat assembly (3, 7) according to one of Claims 1 to 12, in particular assembled by a method according to Claim 13.

## Revendications

1. Ensemble de siège (3, 7) pour un siège de véhicule (1), notamment un siège de véhicule automobile, présentant
a) un élément structurel (10) avec plusieurs nervures de renforcement (12),
b) une couche de rembourrage,
c) une partie d'insertion (30) agencée entre l'élément structurel (10) et la couche de rembourrage,
d) au moins un composant (50) fixé à l'élément structurel (10), ainsi que
e) au moins un moyen de fixation (70),
- l'au moins un moyen de fixation (70) fixant la partie d'insertion (30) à l'élément structurel (10),
**caractérisé en ce que**
- l'au moins un moyen de fixation (70) fixe le composant (50) à l'élément structurel (10), et
l'au moins un moyen de fixation (70) présente une partie de fixation (78) pour la fixation du composant (50) à l'au moins un moyen de fixation (70).

2. Ensemble de siège (7) selon la revendication 1, **caractérisé en ce que** l'ensemble de siège (7) est réalisé sous la forme d'un dossier de siège (9).

3. Ensemble de siège (3, 7) selon la revendication 1 ou 2, **caractérisé en ce que** l'élément structurel (10) est fabriqué en un matériau composite fibreux.

4. Ensemble de siège (3, 7) selon la revendication 3, **caractérisé en ce que** le matériau composite fibreux présente une matrice thermoplastique qui est renforcée par des fibres de verre et/ou des fibres de carbone.

5. Ensemble de siège (3, 7) selon au moins l'une quelconque des revendications 1 à 4, **caractérisé en ce que** l'élément structurel (10) présente une tôle organique déformée avec des nervures de renforcement (12) moulées par injection.

6. Ensemble de siège (3, 7) selon au moins l'une quelconque des revendications 1 à 5, **caractérisé en ce que** l'élément structurel (10) présente au moins un dôme de fixation (14) sur lequel est fixé l'au moins un moyen de fixation (70).

7. Ensemble de siège (3, 7) selon au moins l'une quelconque des revendications 1 à 6, **caractérisé en ce que** la partie d'insertion (30) est fabriquée en un polypropylène expansé.

8. Ensemble de siège (3, 7) selon au moins l'une quelconque des revendications 1 à 7, **caractérisé en ce que** la partie d'insertion (30) présente plusieurs rainures (32) pour la réception de nervures de renforcement (12) de l'élément structurel (10).

9. Ensemble de siège (3, 7) selon au moins l'une quelconque des revendications 1 à 8, **caractérisé en ce que** la rigidité du matériau de l'élément structurel (10) est supérieure à la rigidité du matériau de la partie d'insertion (30), la rigidité du matériau de la partie d'insertion (30) étant supérieure à la rigidité du matériau de la couche de rembourrage.

10. Ensemble de siège (3, 7) selon au moins l'une quelconque des revendications 1 à 9, **caractérisé en ce que** l'au moins un moyen de fixation (70) est réalisé sous la forme d'un clip de fixation (72).

11. Ensemble de siège (3, 7) selon l'une quelconque des revendications 1 à 10, **caractérisé en ce que** l'au moins un moyen de fixation (70) présente une base de clip (74) pour la fixation du moyen de fixation (70) à l'élément structurel (10), la base de clip (74) présentant notamment plusieurs barbillons (76).

12. Ensemble de siège (3, 7) selon au moins l'une quelconque des revendications 1 à 11, **caractérisé en ce que** le composant (50) est un câble (52), notamment d'un faisceau de câbles (54).

13. Procédé de montage d'un ensemble de siège (3, 7) selon au moins l'une quelconque des revendications 1 à 12, **caractérisé en ce que**, dans une étape du procédé, la partie d'insertion (30) est fixée à l'élément structurel (10) au moyen de l'au moins un moyen de fixation (70) et, dans la même étape de procédé ou dans une étape de procédé suivante ou dans une étape de procédé précédente, l'au moins un composant (50) est fixé à l'au moins un moyen de fixation (70).

14. Siège de véhicule (1) avec un ensemble de siège (3, 7) selon l'une quelconque des revendications 1 à 12, notamment monté au moyen d'un procédé selon la revendication 13.
